# EUROPÄISCHE PATENTSCHRIFT

(11) **EP 1 358 789 B1**
(45) Veröffentlichungstag und Bekanntmachung des Hinweises auf die Patenterteilung: **03.10.2007**
(21) Anmeldenummer: 03101139.8
(22) Anmeldetag: 24.04.2003
(51) Int. Cl.: A01F 12/40

(54) **Mähdrescher mit Strohhäcksler**
Combine with straw chopper
Moissonneuse-batteuse avec hache-paille

(30) Priorität: 03.05.2002 DE 10219895
(43) Veröffentlichungstag der Anmeldung: 05.11.2003
(73) Patentinhaber: DEERE & COMPANY, Moline, Illinois 61265-8098 (US)
(72) Erfinder: Dirk, Weichholdt, 57200, Sarreguemines (FR)
(74) Vertreter: Holst, Sönke

(56) Entgegenhaltungen:
- EP-A- 0 727 135
- DE-A- 4 313 841
- US-A- 4 056 107
- US-B1- 6 251 009

## Beschreibung

Die Erfindung betrifft einen Mähdrescher mit einem Axialabscheider und einer dem Auslass des Axialabscheiders benachbarten, rotativ antreibbaren Auswurftrommel, die eingerichtet ist, vom Axialabscheider ausgeworfene Erntegutreste in einen Strohhäcksler zu fördern, wobei zwischen dem Auslass der Auswurftrommel und dem Einlass des Strohhäckslers eine Strohleiteinrichtung angeordnet ist, die ein schwenkbar gelagertes Element umfasst, das zwischen einer Häckselposition, in der es die Pflanzenreste in den Strohhäcksler leitet, und einer Langstrohablageposition verschwenkbar ist, in der es die Pflanzenreste auf den Erdboden leitet.

Ein Mähdrescher mit einem Axialabscheider, einer Auswurftrommel und einem Strohhäcksler ist aus der DE 43 13 841 A bekannt. Die Auswurftrommel dient dazu, die Erntegutreste von einem Axialabscheider wegzufördern und dem Strohhäcksler zuzuführen. Zur Verbesserung der seitlichen Verteilung der Erntegutreste ist zwischen dem Auslass der Auswurftrommel und dem Einlass des Strohhäckslers ein verstellbares Strohleitorgan vorgesehen. Bei den Ausführungsformen dieser Druckschrift, die sich auf einen Mähdrescher mit einem Axialabscheider beziehen, ist kein Langstrohablagebetrieb vorgesehen. Bei einer Ausführungsform mit einem Strohschüttler, bei der keine Auswurftrommel verwendet wird, ist ein an seinem unteren Ende verschwenkbar gelagertes Einzugsblech vorgesehen, das in einer Position das Stroh in den Strohhäcksler und es in seiner anderen Position vor dem Strohhäcksler auf dem Boden abgibt. Aus räumlichen Gründen wäre ein derartiges Einzugsblech an Mähdreschern mit Axialtrennvorrichtungen und ihnen zugeordneten Auswurftrommeln nicht verwendbar.

Die US 4 056 107 A beschreibt einen gattungsgemäßen Mähdrescher mit einer Axialtrennvorrichtung und einer dieser am Strohabgabeende zugeordneten Auswurftrommel, die das Stroh etwa horizontal nach hinten abwirft. Es trifft dann auf ein Leitblech, das an seinem oberen Ende um eine horizontal und quer zur Fahrtrichtung verlaufende Achse zwischen einer schräg nach hinten geneigten Häckselposition, in der es das Stroh in einen Strohhäcksler leitet, und einer Schwadablageposition schwenkbar ist, in der es sich vertikal erstreckt und das Stroh vor dem Strohhäcksler auf den Boden leitet. Als nachteilig ist anzusehen, dass bei in die Schwadablageposition verbrachtem Leitblech Strohteilchen in die Reinigung reflektiert werden können.

Die der Erfindung zugrunde liegende Aufgabe wird darin gesehen, einen Mähdrescher mit einem Axialabscheider und einer Auswurftrommel bereitzustellen, bei dem ein unproblematisches Umschalten zwischen Langstrohablage- und Häckselbetrieb möglich ist.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Strohleiteinrichtung umfasst eine Abwurfklappe, welche am stromabwärtigen Ende eines Auswurfbodens angeordnet ist. Der Auswurfboden umschließt einen Teil des Umfangs der Auswurftrommel. Das den Auswurfboden und die Auswurftrommel verlassende Gut wird somit durch die schwenkbare Abwurfklappe in eine durch die Position der Abwurfklappe vorgebbare Richtung ausgeworfen. In einer bevorzugten Ausführungsform ist die Abwurfklappe bei Langstrohablage nach unten abgesenkt und in der Häckselposition demgegenüber angehoben. Die Erntegutreste werden somit entweder schräg nach hinten und unten direkt auf den Erdboden oder schräg nach hinten und oben in den Einlass des Strohhäckslers ausgeworfen.

Auf diese Weise erhält man einen kompakten Aufbau der Strohleiteinrichtung. Der Strohhäcksler kann fest am Rahmen des Mähdreschers befestigt werden, da sich ein Bewegen zwischen der Langstrohablage- und der Häckselposition erübrigt.

In einer bevorzugten Ausführungsform ist das schwenkbare Element der Strohleiteinrichtung um eine horizontale, quer zur Fahrtrichtung des Mähdreschers verlaufende Achse schwenkbar. Die Erntegutreste können somit mehr oder weniger weit nach hinten und oben abgelenkt und entweder in den Strohhäcksler oder auf den Erdboden gefördert werden. Wenn der Axialabscheider die Erntegutreste in seitlicher Richtung abgibt, könnte die Schwenkachse des Elements sich aber auch in Fahrtrichtung erstrecken.

Die Strohleiteinrichtung umfasst vorzugsweise eine Strohleitklappe, die in der Langstrohablageposition den Einlass des Strohhäckslers abdeckt und ihn in der Häckselposition freilässt. Das Stroh wird somit in der Langstrohablageposition daran gehindert, in den Strohhäcksler einzudringen, während es in der Häckselposition ohne Beeinträchtigung in den Strohhäcksler gelangt. Dabei erfolgt der Schwenkvorgang beispielsweise derart, dass die Strohleitklappe nach oben und hinten verschwenkt wird, wenn sie aus der Langstrohablageposition in die Häckselposition verbracht wird. Ihre Schwenkachse liegt zweckmäßigerweise hinter dem Auslass der Auswurftrommel und darüber, so dass sie eine obere und hintere Begrenzung des Erntegutresteflusses darstellt. Zur besseren Führung der Erntegutreste ist die Strohleitklappe zweckmäßigerweise konkav gekrümmt.

An der Innenseite des Auswurfbodens können verstellbare Leitkufen angeordnet sein, um die seitliche Verteilung der Erntegutreste sowohl beim Langstrohablagebetrieb - d. h. auch die Schwadbreite - als auch beim Häckselbetrieb optimal einstellen zu können.

In den Zeichnungen ist ein nachfolgend näher beschriebenes Ausführungsbeispiel der Erfindung dargestellt. Es zeigt:
- Fig. 1: einen Mähdrescher in Seitenansicht und schematischer Darstellung mit einem Axialabscheider und einer Auswurftrommel, der ein Strohhäcksler folgt,
- Fig. 2: eine vergrößerte Teilansicht der Figur 1, und
- Fig. 3: eine Ansicht des Auswurfbodens unterhalb der Auswurftrommel.

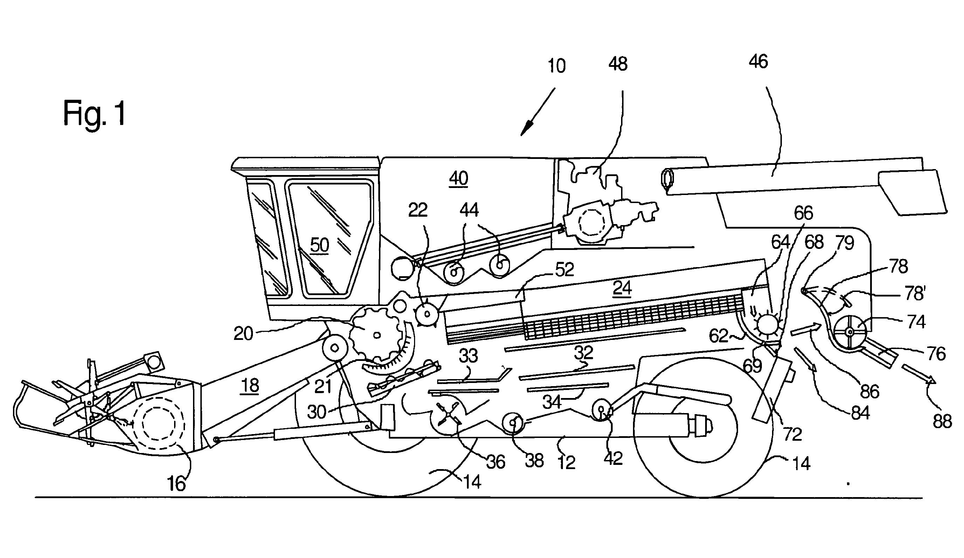

Figur 1 zeigt einen selbstfahrenden Mähdrescher 10 mit einem Tragrahmen 12, der sich über Räder 14 auf dem Boden abstützt und von diesen fortbewegt wird. Die Räder 14 werden mittels nicht gezeigter Antriebsmittel in Drehung versetzt, um den Mähdrescher 10 z. B. über ein abzuerntendes Feld zu bewegen. An den vorderen Endbereich des Mähdreschers 10 ist eine Erntegutbergungsvorrichtung 16 angeschlossen, um Erntegut von dem Feld zu ernten und es nach oben und hinten durch einen Schrägförderer 18 Dresch- und

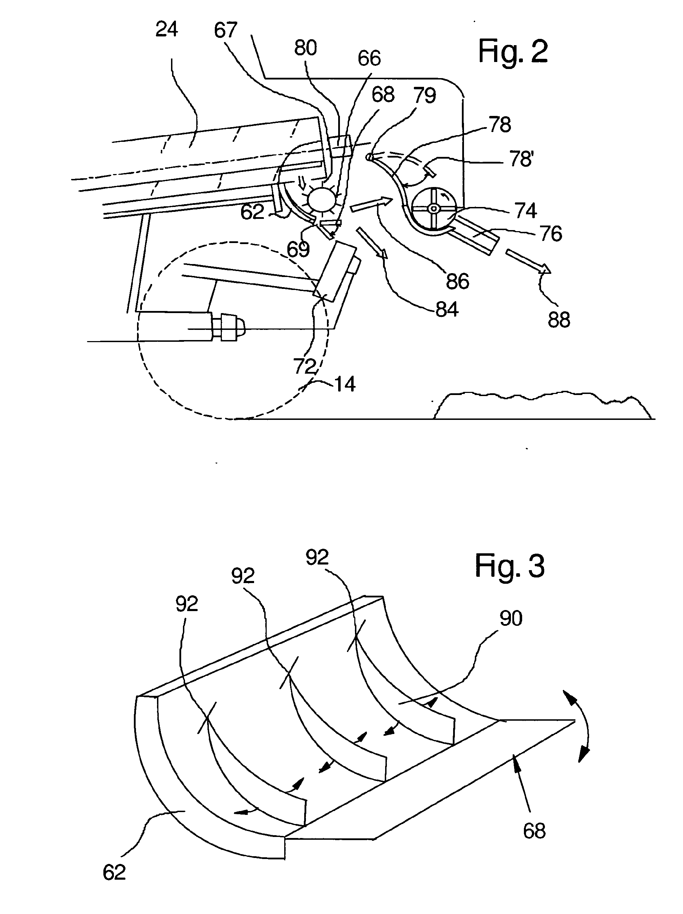

Abscheidemitteln zuzuführen. Die Dresch- und Abscheidemittel umfassen eine quer angeordnete Dreschtrommel 20 und einen dieser zugeordneten Dreschkorb 21, denen das geerntete Gut zuerst zugeführt wird. Es ist aber auch denkbar, die Dreschtrommel 20 wegzulassen und einen Axialabscheider zu verwenden, der einen Dreschabschnitt und einen Trennabschnitt aufweist. Es kann ein einziger Axialabscheider oder zwei (oder mehrere) nebeneinander angeordnete Axialabscheider Verwendung finden. Die Abstreifrolle 23 und die Wendetrommel 22 führen gemeinsam mit einem Zufuhrgehäuse 52 das gedroschene Erntegut von der Dreschtrommel 20 und dem Dreschkorb 21 dem Axialabscheider 24 zu. Der Axialabscheider 24 wird an seiner Rückseite durch ein Getriebe 80 angetrieben (s. Figur 2).

Getreide und Spreu, die während des Dreschvorgangs abgeschieden werden, fallen auf wenigstens eine Schnecke 30, die beides einem Vorbereitungsboden 33 zuführt. Getreide und Spreu, die hingegen aus dem Axialabscheider 24 austreten, fallen auf einen Schüttelboden 32, der es zur Weitergabe auf den Vorbereitungsboden 33 führt. Der Vorbereitungsboden 33 gibt das Getreide und die Spreu einem Siebkasten 34 weiter, dem ein Gebläse 36 zugeordnet ist, um die Abscheidung der Spreu von dem Getreide zu unterstützen. Gereinigtes Getreide wird mittels einer Körnerschnecke 38 einem nicht gezeigten Elevator zugeführt, der es in einen Korntank 40 befördert. Eine Überkehrschnecke 42 gibt unausgedroschene Ährenteile durch einen weiteren nicht gezeigten Elevator zurück in den Dreschprozess. Die Spreu wird an der Rückseite der Siebeinrichtung durch einen rotierenden Spreuverteiler 72 ausgeworfen. Das gereinigte Getreide aus dem Korntank 40 kann durch ein Entladesystem mit Querschnecken 44 und einem Entladeförderer 46 entladen werden.

Die genannten Systeme werden mittels eines Verbrennungsmotors 48 angetrieben, der von einer Bedienungsperson aus einer Fahrerkabine 50 heraus bedient wird. Die verschiedenen Vorrichtungen zum Dreschen, Fördern, Reinigen und Abscheiden befinden sich innerhalb des Tragrahmens 12.

Vom Axialabscheider 24 werden ausgedroschene Erntegutreste (Stroh) durch einen Auslass 64 an der Unterseite des rückwärtigen Endes des nach hinten geschlossenen Axialabscheiders 24 nach unten ausgeworfen. Durch die Wirkung der Fliehkraft und der Schwerkraft fallen die Erntegutreste auf einen konkaven Auswurfboden 62. Oberhalb des Auswurfbodens 62 ist eine Auswurftrommel 66 angeordnet, um deren Umfang Mitnehmer 67 verteilt sind. Die Auswurftrommel 66 wird um ihre Längsachse, die sich quer zur Fahrtrichtung erstreckt, in Drehung versetzt, in Figur 1 im Gegenuhrzeigersinn. Dem stromabwärtigen Ende des Auswurfbodens 62 folgt etwa unterhalb der Drehachse der Auswurftrommel 66 eine um eine horizontale, quer zur Fahrtrichtung verlaufende Achse 69 schwenkbare Abwurfklappe 68. Die Abwurfklappe 68 kann um diese Achse 69 zwischen der in den Figuren 1 und 2 dargestellten Langstrohablageposition und einer Häckselposition verschwenkt werden, wie sie durch die gestrichelte Abwurfklappe 68 in den Zeichnungen angedeutet ist. Die Abwurfklappe 68 könnte länger als sie in den Zeichnungen dargestellt ist gewählt werden.

An der Rückseite der Ausfallhaube 70 ist ein an sich bekannter Strohhäcksler 74 angeordnet, der um eine horizontale, quer zur Fahrtrichtung verlaufende Achse (in den Figuren im Gegenuhrzeigersinn) rotativ antreibbar ist. Er umfasst einen zylindrischen Körper mit pendelnd daran aufgehängten Häckselmessern, die mit stationären Gegenmessern zusammenwirken, um Stroh zu häckseln und mittels einer mit Strohleitblechen ausgestatteten Strohverteilerhaube 76 etwa über die Schnittbreite des Mähdreschers 10 auf dem Feld zu verteilen.

Zwischen der Auswurftrommel 66 und dem Einlass des Strohhäckslers 74 befindet sich eine konkav gekrümmte Strohleitklappe 78 in Form eines Strohleitblechs. Sie ist an ihrem vorderen Ende, dass sich hinter der Auswurftrommel 66 und oberhalb ihrer Drehachse und somit ihres Auslasses befindet, um eine horizontale, quer zur Fahrtrichtung verlaufende Achse 79 schwenkbar am Rahmen 12 des Mähdreschers 10 angelenkt. Die Strohleitklappe 78 erstreckt sich bis zum Einlass des Strohhäckslers 74. Sie ist zwischen der in den Figuren 1 und 2 dargestellten Langstrohablageposition und einer Häckselposition verschwenkbar, in der sie nach hinten und oben verschwenkt und durch die gestrichelt eingezeichnete Strohleitklappe 78' dargestellt ist.

Die Abwurfklappe 68 und die Strohleitklappe 78 dienen als Strohleiteinrichtung. Sie können durch einen gemeinsamen Mechanismus von Hand oder durch geeignete Motore vorzugsweise aus der Fahrerkabine 50 ferngesteuert bewegt werden. Es können auch getrennte Mechanismen zum manuellen und/oder motorischen Verschwenken der Abwurfklappe 68 und der Strohleitklappe 78 verwendet werden. Befindet sich die Abwurfklappe 68 in der Langstrohablageposition, wird das Stroh von der Auswurftrommel 66 schräg nach hinten und unten ausgestoßen und in einem Schwad 82 abgelegt. Es folgt der durch den Pfeil 84 dargestellten Bahn. Eventuell nach hinten ausgestoßenes Stroh prallt gegen die Strohleitklappe 78, wird nach unten reflektiert und gelangt ebenfalls in das Schwad 82.

Werden die Abwurfklappe 68 hingegen nach oben und die Strohleitklappe 78 nach hinten in die Häckselposition verschwenkt, in der die Abwurfklappe mit 78' gekennzeichnet ist, wird das Stroh von der Auswurftrommel 66 entlang der Abwurfklappe 68 gefördert und schräg nach oben und hinten ausgestoßen. Das Stroh folgt der durch den Pfeil 86 angedeuteten Bahn, prallt gegen die konkave Strohleitklappe 78 und wird von ihr nach unten abgelenkt, so dass es in den Einlass des Strohhäckslers 74 gelangt, der es in Richtung des Pfeils 88 auf dem Feld ablegt. Sowohl bei Langstrohablage als auch beim Häckselbetrieb fördert der Spreuverteiler 72 die Spreu in den Strohfluss hinein, so dass Stroh und Spreu gemeinsam im Schwad abgelegt bzw. über die Breite des Mähdreschers 10 verteilt werden.

Der Auswurfboden 62 ist an seiner der Auswurftrommel 66 zugewandten Innenseite mit verstellbaren Leitkufen 90 ausgestattet. Die Leitkufen 90 sind an ihren vorderen Enden um quer zur Strohflussrichtung verlaufende Achsen 92 schwenkbar am Auswurfboden 66 befestigt. Sie können in einer einfachen Ausführungsform manuell verstellt und arretiert werden. In einer anderen Ausführungsform können sie durch einen gemeinsamen Motor oder mehrere, den einzelnen Leitkufen 90 zugeordnete Motore bewegbar sein. Die Motore können durch den Bediener in der Fahrerkabine 50 manuell gesteuert werden. Es kann aber auch ein Sensor (oder mehrere Sensoren) vorgesehen sein, der die Breitenverteilung des Strohs erfasst und den Motor bzw. die Motore steuert, wie in der DE 102 15 026 A beschrieben wird, deren Offenbarung durch Verweis mit aufgenommen wird. Die Leitkufen 90 ermöglichen bei Langstrohablage, einen über seine Breite gleich hohen Schwad zu erzeugen bzw. die Schwadbreite einzustellen. Beim Häckselbetrieb ermöglichen sie eine über seine Breite gleichmäßige Beaufschlagung des Strohhäckslers 74.

## Patentansprüche

1. Mähdrescher (10) mit einem Axialabscheider (24) und einer dem Auslass (64) des Axialabscheiders (24) benachbarten, rotativ antreibbaren Auswurftrommel (66), die eingerichtet ist, vom Axialabscheider (24) ausgeworfene Erntegutreste in einen Strohhäcksler (74) zu fördern, wobei zwischen dem Auslass der Auswurftrommel (66) und dem Einlass des Strohhäckslers (74) eine Strohleiteinrichtung angeordnet ist, die ein schwenkbar gelagertes Element umfasst, das zwischen einer Häckselposition, in der es die Pflanzenreste in den Strohhäcksler (74) leitet, und einer Langstrohablageposition verschwenkbar ist, in der es die Pflanzenreste auf den Erdboden leitet, **dadurch gekennzeichnet, dass** die Strohleiteinrichtung eine Abwurfklappe (68) umfasst, die am stromabwärtigen Ende eines Auswurfbodens (62) angeordnet ist, mit dem die Auswurftrommel (66) zusammenwirkt, und dass die Abwurfklappe schwenkbar am Auswurfboden (62) angelenkt und zwischen einer Langstrohablageposition und einer Häckselposition verschwenkbar ist.

2. Mähdrescher (10) nach Anspruch 1, **dadurch gekennzeichnet, dass** die Strohleiteinrichtung eine schwenkbar gelagerte Strohleitklappe (78) umfasst, die in der Langstrohablageposition den Einlass des Strohhäckslers (74) abdeckt und ihn in der Häckselposition freigibt.

3. Mähdrescher (10) nach Anspruch 2, **dadurch gekennzeichnet, dass** die Strohleitklappe (78) aus der Langstrohablageposition nach hinten und oben in die Häckselposition verschwenkbar ist.

4. Mähdrescher (10) nach Anspruch 2 oder 3, **dadurch gekennzeichnet, dass** sich die Schwenkachse der Strohleitklappe (78) hinter dem Auslass der Auswurftrommel (66) und oberhalb des Auslasses der Auswurftrommel (66) befindet.

5. Mähdrescher (10) nach einem der Ansprüche 2 bis 4, **dadurch gekennzeichnet, dass** die Strohleitklappe (78) konkav gekrümmt ist.

6. Mähdrescher (10) nach einem der Ansprüche 1 bis 5, **dadurch gekennzeichnet, dass** an der der Auswurftrommel (66) zugewandten Innenseite des Auswurfbodens (62) verstellbare Leitkufen (92) angeordnet sind.

7. Mähdrescher (10) nach einem der vorhergehenden Ansprüche, **dadurch gekennzeichnet, dass** die Abwurfklappe (68) und/oder die Strohleitklappe (78) um eine horizontale, sich quer zur Fahrtrichtung des Mähdreschers (10) erstreckende Achse (69, 79) schwenkbar sind.

## Claims

1. Combine harvester (10) having an axial separator (24) and a rotatively drivable discharge drum (66) which is situated adjacent to the outlet (64) of the axial separator (24) and which is set up to convey crop residues discharged from the axial separator (24) into a straw chopper (74), wherein between the outlet of the discharge drum (66) and the inlet of the straw chopper (74) there is disposed a straw-guiding mechanism, which comprises a pivotably mounted element that is pivotable between a chopping position, in which it guides the plant residues into the straw chopper (74), and a long-straw depositing position, in which it guides the plant residues onto the soil, **characterized in that** the straw-guiding mechanism comprises a discharge flap (68), which is disposed at the downstream end of a discharge bottom (62) with which the discharge drum (66) interacts, and **in that** the discharge flap is pivotably attached to the discharge bottom (62) and can be pivoted between a long-straw depositing position and a chopping position.

2. Combine harvester (10) according to Claim 1, **characterized in that** the straw-guiding mechanism comprises a pivotably mounted straw-guiding flap (78), which in the long-straw depositing position covers the inlet of the straw chopper (74) and in the chopping position frees it.

3. Combine harvester (10) according to Claim 2, **characterized in that** the straw-guiding flap (78) can be pivoted out of the long-straw depositing position rearwards and upwards into the chopping position.

4. Combine harvester (10) according to Claim 2 or 3, **characterized in that** the pivot axis of the straw-guiding flap (78) is located behind the outlet of the discharge drum (66) and above the outlet of the discharge drum (66).

5. Combine harvester (10) according to one of Claims 2 to 4, **characterized in that** the straw-guiding flap (78) is concavely curved.

6. Combine harvester (10) according to one of Claims 1 to 5, **characterized in that** on that inner side of the discharge bottom (62) which faces the discharge drum (66) there are disposed adjustable guide runners (92).

7. Combine harvester (10) according to one of the preceding claims, **characterized in that** the discharge flap (68) and/or the straw-guiding flap (78) is/are pivotable about a horizontal axis (69, 79) extending transversely to the direction of travel of the combine harvester (10) .

## Revendications

1. Moissonneuse-batteuse (10) avec un séparateur axial (24) et un tambour d'éjection (66) pouvant être entraîné en rotation, voisin de la sortie (64) du séparateur axial (24), qui est conçu pour transporter dans une hacheuse de paille (74) les restes de récolte rejetés par le séparateur axial (24), un dispositif de guidage de la paille étant disposé entre la sortie du tambour d'éjection (66) et l'entrée dans la hacheuse de paille (74), lequel comprend un élément pivotant, qui peut pivoter entre une position de hachage, dans laquelle il conduit les restes de plantes dans la hacheuse de paille (74), et une position de dépose des pailles longues, dans laquelle il conduit les restes de plantes vers le sol, **caractérisée en ce que** le dispositif de guidage de la paille comprend un clapet d'éjection (68), qui est disposé à l'extrémité aval d'un plancher d'éjection (62), avec lequel le tambour d'éjection (66) coopère, et **en ce que** le clapet d'éjection est articulé sur le plancher d'éjection (62) et peut pivoter entre une position de dépose des pailles longues et une position de hachage.

2. Moissonneuse-batteuse (10) suivant la revendication 1, **caractérisée en ce que** le dispositif de guidage de la paille comprend un clapet de guidage de la paille (78) pivotant, qui recouvre l'entrée de la hacheuse de paille (74) dans la position de dépose des pailles longues et la libère dans la position de hachage.

3. Moissonneuse-batteuse (10) suivant la revendication 2, **caractérisée en ce que** le clapet de guidage de la paille (78) peut pivoter de la position de dépose des pailles longues vers l'arrière et vers le haut dans la position de hachage.

4. Moissonneuse-batteuse (10) suivant la revendication 2 ou 3, **caractérisée en ce que** l'axe de pivotement du clapet de guidage de la paille (78) se trouve derrière la sortie du tambour d'éjection (66) et au-dessus de la sortie du tambour d'éjection (66).

5. Moissonneuse-batteuse suivant l'une des revendications 2 à 4, **caractérisée en ce que** le clapet de guidage de la paille (78) présente une courbure concave.

6. Moissonneuse-batteuse (10) suivant l'une des revendications 1 à 5, **caractérisée en ce que** des patins de guidage (92) réglables sont disposés du côté intérieur du plancher d'éjection (62) situé du côté du tambour d'éjection (66).

7. Moissonneuse-batteuse (10) suivant l'une des revendications précédentes, **caractérisée en ce que** le clapet d'éjection (68) et/ou le clapet de guidage de la paille (78) peuvent pivoter autour d'un axe horizontal (69, 79) s'étendant transversalement au sens de la marche de la moissonneuse-batteuse (10).
